# EUROPEAN PATENT APPLICATION

(11) **EP 4 723 690 A1**
(43) Date of publication of application: **08.04.2026**
(21) Application number: 24204142.4
(22) Date of filing: 02.10.2024
(51) Int. Cl.: H04W 4/50, H04W 4/70, H04W 52/02

(54) **INTERNET OF THINGS DEVICE AND NODE**

(71) Applicant: Panasonic Intellectual Property Corporation of America, Torrance, CA 90504 (US)
(72) Inventor: KUANG, Quan, 63225 Langen (DE); SUZUKI, Hidetoshi, Osaka, 571-8501 (JP); SHARIATMADARI, Hamidreza, 63225 Langen (DE); KANG, Yang, 46933 Singapore (SG)
(74) Representative: Grünecker Patent- und Rechtsanwälte PartG mbB

(57) **Abstract**

The present disclosure relates to an Internet of Thing, IoT, device, comprising the following. A circuitry, which, in operation, determines a trigger in a first operation state of the IoT device, wherein the first operation state supports maintaining volatile memory content; and the circuitry, which, in operation, decides, based on the trigger, whether to operate the IoT device in the first operation state or in a second operation state, wherein the second operation state supports maintaining volatile memory content.

## Description

### BACKGROUND

### 1. Technical field

The present disclosure relates to an loT device and its communication with a node, for example, a base station or an intermediate node connected to a base station.

### 2. Description of the Related Art

The Internet of things (IoT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states.

### SUMMARY

One non-limiting and exemplary embodiment facilitates an Internet of Things, loT, device communicating with a node.

In an embodiment, the techniques disclosed herein feature: An Internet of Things, loT, device, comprising a circuitry, which, in operation, determines a trigger in a first operation state of the loT device, wherein the first operation state supports maintaining volatile memory content; and the circuitry, which, in operation, decides, based on the trigger, whether to operate the loT device in the first operation state or in a second operation state, wherein the second operation state supports maintaining volatile memory content.

In another embodiment, the techniques disclosed herein feature a method comprising the following steps performed by an Internet of Things, loT, device:
determining a trigger in a first operation state of the loT device, wherein the first operation state supports maintaining volatile memory content; and
deciding, based on the trigger, whether to operate the loT device in the first operation state or in a second operation state, wherein the second operation state supports maintaining volatile memory content.

In another embodiment, the techniques disclosed herein feature a node comprising a circuitry, which, in operation, determines a trigger for an Internet of Things, loT, device and a first operation state of the loT device, wherein the first operation state supports maintaining volatile memory content; and the circuitry, which, in operation, determines, based on the trigger and the first operation sate, whether the loT device operates in the first operation state or in a second operation state, wherein the second operation state supports maintaining volatile memory content.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system to which exemplary embodiments of the present disclosure may be applied;
- **Fig. 2**: illustrates a node-A-IoT device topology;
- **Fig. 3**: illustrates another node-A-loT device topology;
- **Fig. 4**: illustrates a signaling diagram, wherein an A-loT device successfully completes a communication process;
- **Fig. 5**: illustrates a signaling diagram, wherein an A-loT device fails to successfully complete a communication process;
- **Fig. 6**: illustrates a schematic diagram of loT device operation states;
- **Figs. 7 and 8**: illustrates the schematic diagram of loT device states of Fig. 6 and the loT device behavior in view of exemplary embodiments of the present disclosure;
- **Fig. 9**: illustrates a schematic diagram of loT device operation states in response to receiving a trigger for changing an operation state;
- **Fig. 10**: illustrates a signaling diagram for an loT device to react on an energy status of the loT device;
- **Fig. 11**: illustrates a schematic diagram of loT device operation states in the situation discussed in Fig. 10;
- **Fig. 12**: illustrates a signaling diagram for an loT device to react in view of a completed communication process;
- **Fig. 13**: illustrates a schematic diagram of loT device operation states in the situation discussed in Fig. 12;
- **Fig. 14**: illustrates a signaling diagram for an loT device to report an energy status of the loT device;
- **Fig. 15**: illustrates a general, simplified and exemplary block diagram of an loT device and a node;
- **Fig. 16**: illustrates functional structure of the circuitries pertaining to the loT device and the node;
- **Fig. 17**: illustrates a flow diagram for the loT device according to an exemplary embodiment of the present disclosure;
- **Fig. 18**: illustrates a flow diagram for the node according to an exemplary embodiment of the present disclosure;
- **Fig. 19**: is a signaling diagram illustrating an exemplary exchange between an loT device and a node according to an exemplary embodiment of the present disclosure; and
- **Fig. 20**: shows exemplary functional split options in 5G O-RAN.

### DETAILED DESCRIPTION

### 5G NR system architecture and protocol stacks

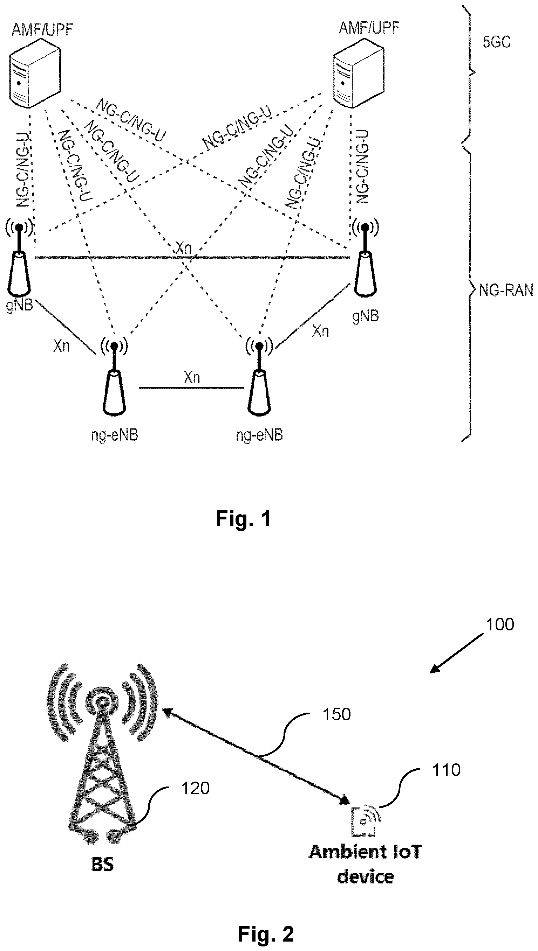

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gN Bs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device, in the following also referred to as loT device, may be an ultra-low complexity device with ultra-low power consumption for very-low end loT applications. Examples for A-loT devices include without any limitation wearables, smart home devices, automotive devices, sensors, smart keys, healthcare devices, etc.

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

### Topologies

Particularly, two different topologies are exemplarily considered in this disclosure. In a first topology 100 as illustrated in **Fig. 2****,** an A-loT device 110 directly and bidirectionally communicates with a base station 120 over a wireless channel 150. In general, theA-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

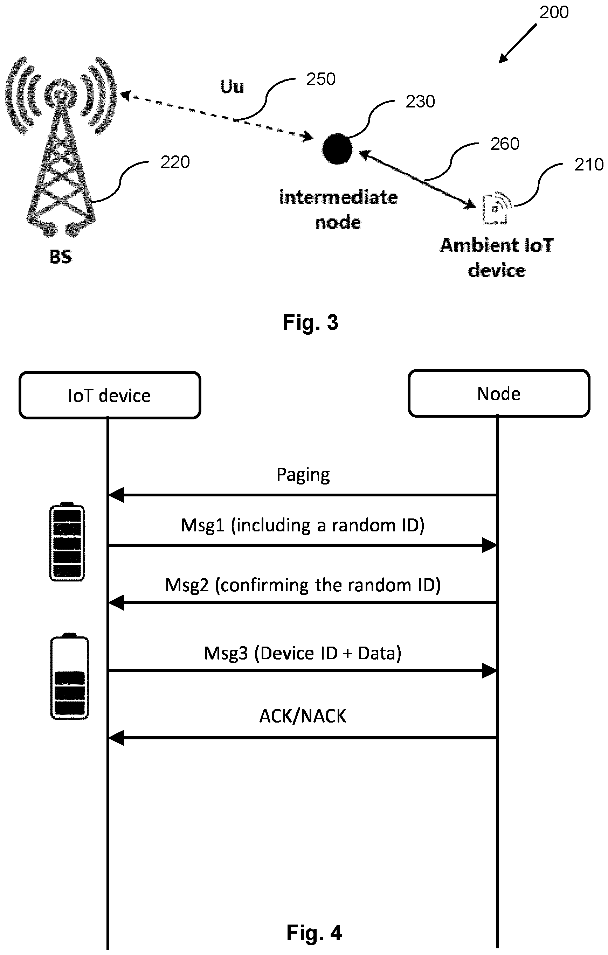

In a second topology as illustrated in **Fig. 3****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

### Further improvements

An loT device, for example the A-loT device 110 may have a limited power storage, and harvest energy capability. In particular, the A-loT device may use a capacitor instead of a battery to store energy, which has a lower power storage capacity. With a limited storage capacity, the energy level could vary frequently which affects the communication ability

For instance, as shown in **Fig. 4****,** an A-loT device may receive a paging or triggering signal to initiate a communication process such as the Random Access Channel (RACH) procedure and send and/or receive data during the communication process. The communication process may require a plurality of messages and responses to be successful. In more detail, the node initiates the device paging. The loT device identifies the paging and sends a response message (Msg 1) including a random ID. The node sends a Msg2 to the loT device. The loT device can then send Msg 3 to the node. The node can optionally send an ACK/NACK in response to the data transmission. Energy is consumed during the process and the energy storage may be depleted during the communication process.

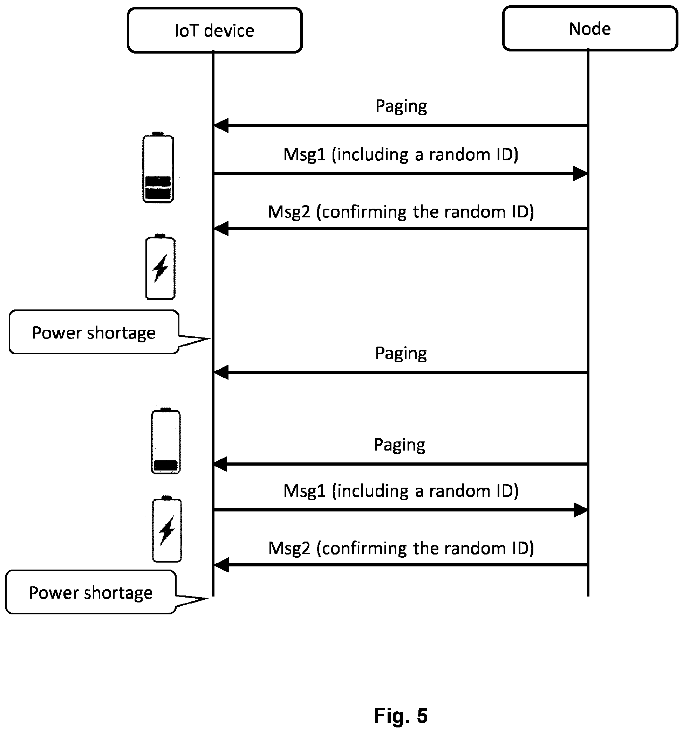

For example, as shown in **Fig. 5****,** the device may initiate the process but cannot finish it due to the power shortage after receiving Msg2. In more detail, the node initiates the device paging, and the loT device sends a response message (Msg1) in response. The node sends a confirmation and waits for a response from the loT device. However, the loT device cannot send a response (e.g., Msg 3) because it lacks power. The node may send multiple paging signals to the loT device, assuming that the loT device did not successfully receive the previous messages. The node may be unaware of the device's lack of power and perform the paging and/or triggering multiple times without giving the loT device enough time to harvest power.

In a similar situation, the loT device may initiate data transmission/reception when it has a limited amount of power. If the amount of data is large, the device may run out of energy without completing the transmission/reception. In fact, performing the data transmission/reception may consume the energy and result in a longer time to recover the energy.

The problem is that if the node does not know when the loT device is able to and/or not able to accumulate sufficient energy for receiving and transmitting, the communication between node and loT device is not efficient.

The technical problem to be solved is to report loT device energy status in a way to benefit the node. Further technical problems are to reduce the communication overhead between the loT device and the node, increase the energy harvesting capability of the loT device, and minimize power consumption of the loT device.

The inventors have therefore identified the possibility of providing improved transmission methods to avoid one or more of the disadvantages described above. The present invention relates to various solutions and variants for such improved transmission methods.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a **mobile station** or **mobile node** or **user terminal** or **user equipment (UE)** or I**oT device** or A-**IoT device** is a **physical entity** (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term **"base station"** or **"radio base station"** or **"node"** or **"reader"** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, etc. (see above background discussion).

As used herein, the term **"message"** specifically refers to a formatted and standardized unit of data transmission that carries encapsulated information, including trigger signals (also referred to herein as triggering signals), paging signals, and data signals between devices or systems within a network. In the context of loT or communication systems, a message can refer to a trigger signal, for example to initiate a specific action or process, a paging signal, for example to locate or notify an loT device when there is an incoming communication, such as a data packet, and/or a data signal that carries the actual information or data payload. The network can send a message when it needs to notify the loT device of an incoming event. Trigger and paging signals within the packet can prompt a response or action at the receiving end, such as triggering a specific process, such as a RACH process, initiating data transmission, or triggering a sensor connected to the loT device. The data signal may contain the data or information to be communicated, such as commands, status updates, or other relevant information. In addition, the message may contain control information such as identification numbers, source and destination addresses, sequence numbers, error detection codes, and other metadata. This control information helps ensure that the message is routed and processed correctly and that data integrity is maintained during transmission.

As used herein, the term **"response"** refers to a reply or reaction provided by a receiving device or system, e.g. the loT device, in response to a received message, such as a trigger signal, a paging signal, or a data signal. It represents the acknowledgement or response sent back to the sender, e.g. the node, to indicate the outcome of the received message. Responses are used to acknowledge receipt, provide requested information, or indicate the success or failure of an operation.

As used herein, the term **"communication process"** refers to the systematic sequence of steps that enables the transmission of information from one point to another point. This process facilitates effective communication between devices, networks, or systems. The communication process can involve at least one of encoding, transmitting, receiving, and decoding messages across networks, enabling the transfer of data or information between devices or systems. The communication process comprises for example the RACH procedure, and other processes for establishing, maintaining, and managing communication between loT devices and nodes.

As used herein, the term **power shortage** also referred to as a power outage, energy shortage, or power crisis, which occurs when the demand for electrical power exceeds the available supply, leading to a temporary or prolonged inability to meet the electricity needs of the loT device. For example, in view of a power shortage, the above-described communication process can be unsuccessful in view of an loT device that can, for example, not execute communication steps related to the communication process such as sending a response for finalizing the communication process. A power shortage can be determined by an loT-device, e.g. by measurements, or can be determined based on an indication, e.g. a number of previous failed communication processes.

An **energy charge level** refers to the current state or capacity of energy storage in in the loT device. It facilitates to indicate a power shortage. The loT-device can determine or measure the energy charge level. For example, the loT device can measure the energy charge level, e.g. by measuring at least one of a voltage or a current indicating a state of charge. Additionally or alternatively, the loT device can determine the energy charge level based on a failed response to a communication with the node, which may indicate a power shortage.

As used herein, a **trigger** can be for example a determined or measured energy charge level of the loT device for indicating whether the loT device has a power shortage or not, a message, which can be received for example from the node, and/or a determination that the loT device has successfully finalized a communication process, e.g. with the node. The trigger refers to an event or condition that initiates a predefined action, e.g. change an operation status to increase the capability of harvesting energy of the loT device, or a response, e.g. notifying the node of sufficient energy of the loT device, within the network or system. In other words, the trigger is a mechanism that monitors certain conditions or events and initiates a corresponding action.

As used herein, **operation state** of an loT device refers to the status or condition in which the device is functioning. It provides insight into how the device is performing, what it is doing, and whether it is ready to perform its intended tasks. IoT devices can cycle through different operational states depending on a condition. The loT device can comprise for example two or three operation states. Each operation state can relate to a capability of the loT device to harvest energy. Further, the loT device may receive and transmit messages in a first operation state and may only receive messages in a second operation state. The different operating states can be distinguished according to whether volatile memory content is maintained, also referred to as volatile memory content is retained, or not. Maintaining volatile memory content can facilitate that a timer is kept running and/or messages can be received by the loT device.

As used herein **energy harvesting** is the process of capturing and converting, in general small amounts, of energy from the environment into usable electrical energy for the loT device. This energy is typically generated from natural or existing energy sources like carrier waves, light, heat, and/or vibrations.

As used herein, a **carrier wave** is a high-frequency electromagnetic wave that is for example modulated to carry information, typically in communications systems. Carrier waves are typically in the radio frequency (RF) spectrum, ranging from kilohertz (kHz) to gigahertz (GHz). Higher frequencies, such as those used in microwave communications, are especially suited for energy harvesting due to their ability to deliver more power in a smaller wavelength. IoT-devices can capture the RF energy from carrier waves. When the wave reaches the loT-device, the electromagnetic energy is converted into a small voltage, which can then be processed for various applications. Carrier waves in the field of energy harvesting act as a convenient medium for transmitting electromagnetic energy that can be captured and converted into useful electrical power, particularly in low-power, remote, or wireless applications

The present disclosure relates to an loT device, in particular an A-loT device, a base station, and an intermediate node connected to a base station, methods of communication between the A-loT device and the base station and the A-loT device and the intermediate node.

Different and exemplary implementations of the improved transmission procedure are explained in the following. For the explanation of the different implementation, some exemplary and simplifying assumptions are made.

According to one exemplary assumption, the loT-device operation states comprises a RETENTION operation state. The solution and the implementations are primarily and exemplarily described on the basis of such a RETENTION operation state, in which for example a RETENTION-Timer can be kept running, and upon expiry of the RETENTION-Timer, the loT device decides whether or not to operate the loT device in a second operation state, e.g. an ON operation state that also allows to run a timer, such as an ON-Timer. Thus, the node can be aligned to the behavior of the loT device and knows when the communication capabilities of the loT device are limited in order to increase the energy harvesting capabilities. The solutions a preliminary focused on how the node can be aligned to the behavior of the loT device and how to avoid an operation state where a timer cannot be kept running, e.g. an OFF operation state.

However, this is only an example of a scenario to which the solutions can be applied. The solution can also be applied to other scenarios than keeping a timer running, e.g. in scenarios in which a message of the node can trigger a change an loT device operation state without any timer running.

However, for the sake of simplicity, it is assumed in the following that one of the first and second operation states is a RETENTION operation state and one of the first and second operation states is an ON operation state. Other names may used for the RETENTION and the ON operation state, such as SLEEP state and ACTIVE state.

*Solution* - *Trigger to further decide whether to operate a device in a first or second operation state*

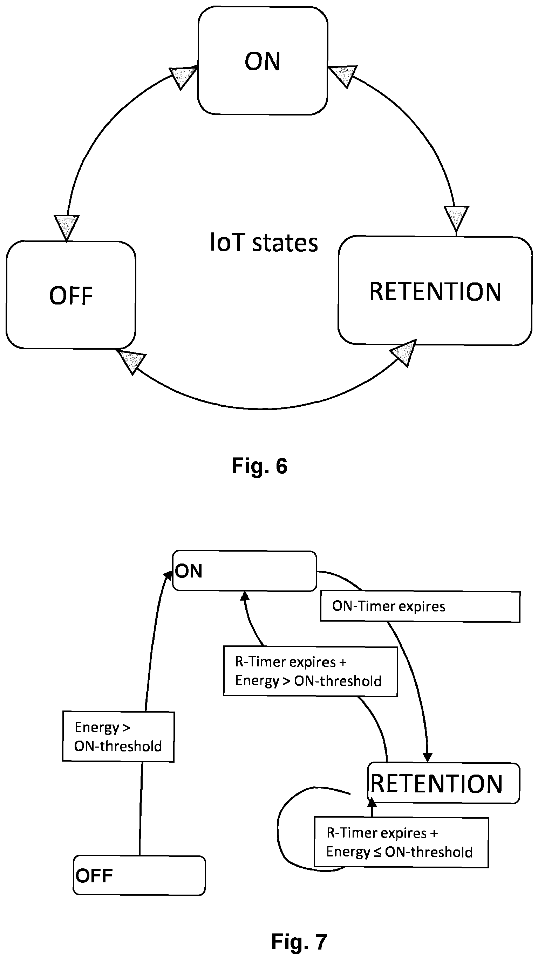

**Fig. 6** shows a summary of possible exemplary loT operation states, in the following referred to as states such as ON, OFF, and RETENTION.

The loT device may communicate in ON state, i.e. the device can perform transmission and reception for communication with the node. Further, the loT device may maintain a timer in the ON state, in the following referred to as ON-Timer, to identify the end of the ON operation state.

The loT device may harvest energy in a RETENTION operation state. Further, the loT device maintains a volatile memory content from ON operation state in the RETENTION operation state and vice versa. This facilitates that the loT device can maintain a timer in the RETENTION operation state, in the following referred to as RETENTION-Timer, to identify the end of the RETENTION operation state. Additionally, the volatile memory facilitates that to handle incoming messages, e.g. processing for deciding on whether to operate the loT device in a second operation state. In other words, the loT device may be able to receive messages in the RETENTION operation state but may not transmit messages in the RETENTION operation state.

The loT device may harvest energy in an OFF operation state. However, the loT device does not maintain a volatile memory content from ON operation state in the OFF operation state. The loT device cannot perform transmission or reception for communication with the node in the OFF operation state. The loT device does not maintain a timer to identify the end of OFF operation state.

According to a first solution, the loT device determines to operate the loT device in the first operation state or in a second operation state based on a trigger determined in a first operation state. The second operation state may be subsequent to the first operation state. The first operation state is herein referred for example as current operation state. The second operation state is herein referred for example as next operation state.

It is provided an (ambient) Internet of Things, A-loT, device, comprising circuitry, which, in operation, determines (is configured to determine) a trigger (e.g. power shortage, a trigger signal for changing the state, determining a completion of a communication process) in a first operation state of the loT device, wherein the first operation state supports maintaining volatile memory content (e.g. an ON operation state and a RETENTEION operation state); and a transceiver which, in operation, decides (is configured to decide) based on the trigger whether to operate the loT device in the first operation state or in a second operation state, wherein the second operation state supports maintaining volatile memory content (e.g. an ON operation state or a RETENTEION operation state). The second operation state may be different to the first operation state.

It is further provided a node comprising, a circuitry, which, in operation, determines a trigger (e.g. power shortage, a trigger signal for changing the state, determining a completion of a communication process) for the loT device (e.g. a message for the loT device or an indication of a power shortage such as a missing response for a message from the loT device) and a first operation state of an Internet of Things, loT, device, wherein the first operation state supports maintaining volatile memory content (e.g. an ON operation state or a RETENTEION operation state); and the circuitry, which, in operation, determines, based on the trigger and the current operation state, whether the loT device operates in the first operation state or in a second operation state, wherein the second operation state supports maintaining volatile memory content (e.g. an ON operation state or a RETENTEION operation state).

In the situation discussed in above Fig. 6, the circuitry, in operation, determines a trigger and decides based on the trigger to whether to operate the loT device in the first operation state or in a second operation state. Various solutions how the trigger may be are discussed in the following implementations.

### 1^{st} Implementation - Energy status of the IoT device as a trigger

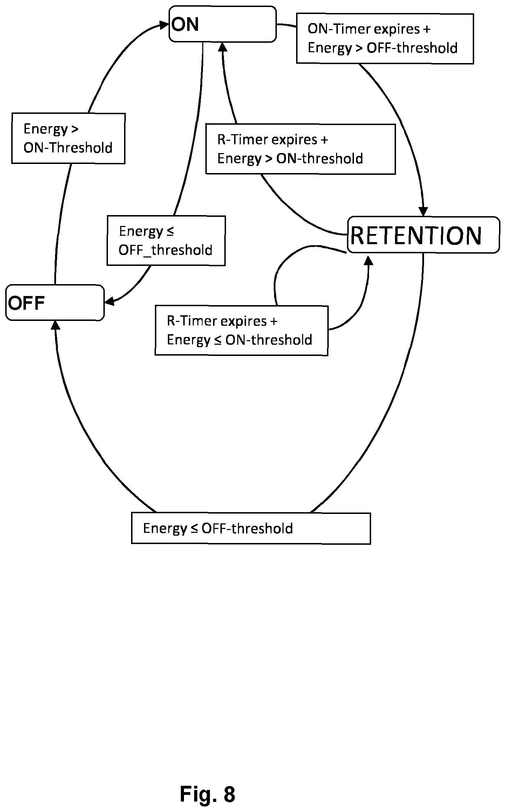

An exemplary implementation is shown in **Figs. 7** and **8****.** The loT device can enter an ON operation state from an OFF operation state. For example, to enter from OFF to ON operation state the loT device must obtain sufficient energy, also referred to as harvesting energy, during the OFF operation state.

The loT device can decide whether to enter the ON operation state from the OFF operation state based on a measured or determined energy charge level. For example, the energy charge level is compared with a threshold value, for example a configured or indicated threshold value for an ON operation state, also referred to as ON-threshold. For example, in Fig. 7, if the energy charge level is larger than the ON-threshold, the loT device is operated in the ON operation state. This facilitates that the loT device can accomplish a certain task (e.g. complete all involved procedures for an inventory or/and command service), if the node is able to start communication with device at the beginning of the ON operation state of loT device.

Upon entering the ON operation state, the loT device may start an ON-Timer to count the end of ON operation state, which can be a pre-defined value stored in the device non-volatile memory (e.g. 10ms). In other word, the loT device starts the ON-Timer as a first operation state timer, wherein the first operation state timer is in this example a timer for the ON operation state.

Further, as in the example shown in Fig. 7, after the ON-Timer expires, the loT device goes to the RETENTION operation state. In other words, the loT device may decide to operate the loT device in the second operation state upon expiration of the first operation state timer.

Upon entering RETENTION operation state, device starts a RETENTION-Timer to count the end of RETENTION operation state, which can be a pre-configured value stored in the loT device non-volatile memory. The value may be e.g. 40ms. The RETENTION-Timer may be larger than the ON-Timer. In other word, the loT device starts the RETENTION-Timer as a first operation state timer, wherein the first operation state timer is in this example a timer for the RETENTION operation state.

The capability of the loT device in RETENTION operation state to harvest energy may be larger than in the ON operation state. This facilitates that loT device has sufficient energy in the ON operation state. However, it may occur that at the end of the RETENTION-Timer, the loT device has not harvested sufficient energy or at the end of the ON-Timer, the loT device may run out of energy and cannot support the RETENTION operation state till expiry of the RETENTION-Timer. For example, the energy charge level is less than a threshold value. In view of basing the decision to change to the ON operation state only on the RETENTION-timer, this could cause the problem that the loT device may fail to complete a communication process as discussed in Fig. 5 or a process to harvest sufficient energy.

According to the a first exemplary solution according to the 1^{st} implementation shown in Figs. 7 and 8, when the loT device is in the RETENTION operation state, the loT devices further bases the decision whether to operate the loT device in the ON operation state, i.e. change from RETENTION operation state to the ON operation state, or to operate the loT device in the RETENTION operation state, i.e. not change from RETENTION operation state to the ON operation, on a threshold value, for example the above discussed ON-threshold. In other words, an alternation between RETENTION operation state and ON operation state can be based in addition or alternatively to the above-mentioned timers by a trigger such as a measured or determined energy status level of the loT device.

According to the a second exemplary solution according to the 1^{st} implementation shown in Fig. 8, when the loT device is in the ON operation state, the loT devices further bases the decision whether to operate the loT device in the RETENTION operation state, i.e. change from ON operation state to the RETENTION operation state, or to operate the loT device in the ON operation state, i.e. not changing from ON operation state to the RETENTION operation state, on a threshold value, for example an OFF-threshold. In other words, an alternation between RETENTION operation state and ON operation state can be based in addition or alternatively to the above-mentioned timers by a trigger such as a measured or determined energy status level of the loT device.

In view of the second exemplary solution according to the 1^{st} implementation shown in Fig. 8, the loT device may additionally decide based on a threshold value, for example an OFF-threshold, to operate the loT device in an OFF operation state. For example, as shown in Fig. 8, if energy charge level goes down below the OFF-threshold (due to, e.g., energy harvesting failure in RETENTION operation state or excessive energy consumption in ON operation state). Then, the loT device goes to OFF operation state. In other words, during ON operation state, if device has drained energy below OFF-threshold, e.g. the loT device can no longer sustain RETENTION operation state for a certain duration such as the RETENTION-timer, the loT device might go to OFF operation state, although ON-Timer is still running. Additionally or alternatively, during RETENTION operation state, if energy goes down below OFF-threshold, the loT device goes to the OFF operation state.

In other words, additionally (as shown in Figs. 7 and 8) or alternatively (as not shown in the Figs. 7and 8) to determine the end of a timer, the loT device determines according to a 1^{st} implementation an energy charge level of the loT device as the trigger and decides whether to operate the loT device in the first operation state or the second operation state based on the energy charge level.

The energy charge level of the device can be indicated by at least one of the following information:
- a percentage of remaining energy of the loT device;
- a number, e.g. a minimum number, of transactions necessary for a communication process;
- a number of transmissions and/or receptions necessary for a communication process;
- an amount of time necessary for a communication process;
- an amount of bit information to be carried by a communication process;
- a type of communication process; and.
- an amount of energy for operating the loT device in the first operation state and the second operation state.

According to one variant of the 1^{st} implementation, the information of the energy charge level may be a percentage of remaining energy. The remaining energy can for example indicate the percentage of remaining energy that the loT device stores upon entering the second operation state, before beginning a communication process, or the percentage of remaining energy the loT device stores after completing a communication process. The indication of percentage can be related to a threshold for switching in a second operation state, as for example the ON-threshold discussed with reference to Figs. 7 and 8 and/or the OFF-threshold discussed with reference to Fig. 8. For example, the ON-threshold can be 100% and the OFF-threshold can be 30%. This definition facilitates that the loT device can decide whether to operate the loT device in the second operation state or the first operation state. Additional information may be available to the node and loT device, for example the above discussed timer scheme, so that the node knows when the loT device is in an ON and/or RETENTION operation state.

According to a further variant of the 1^{st} implementation, the information of energy charge level of the loT device can comprise a number of monitoring and/or transmissions and/or receptions that can be performed by loT device. The number of transactions can refer to an exchange of a number of interactions between two or more parties. It may involve the back-and-forth communication, where messages, signals, or data are sent and received, for example with the purpose of completing a specific goal or achieving mutual understanding. For example, the ON-threshold is defined as that the loT device can perform a complete communication process, e.g. the loT device can perform 3 receptions and 2 transmissions, which covers one complete transaction from Msg0 to Msg4 in Fig. 4, plus 2 monitoring of PRDCH. The OFF-threshold can be defined as that the loT device cannot perform one single transmission. This facilitates that communication between node and loT device can be made more efficient because of the common understanding between loT device and node can be improved.

Similarly, the decision may be based according to further variants of the 1^{st} implementation on an amount of time necessary for at least partly finalizing a communication process, an amount of bit information to be carried by a communication process, and/or a type of communication process. The amount of time can be measured from a first reception of a message, e.g. the paging signal, to a final response from the loT device or the node, e.g. an ACK/NACK in Fig. 5, to be received by the loT device. The amount of bit information may be, for example, a specific data size scheduled for a D2R data transmission. The communication process comprises at least one of: a Random Access Channel (RACH) procedure; a data transmission process; a data reception process; and an inventory command.

According to a further variant of the 1^{st} implementation, the information of energy charge level of the loT device can comprise information of an amount of energy for operating the loT device in the first operation state and the second operation state. In other words, a certain energy consumption model can be defined and threshold is represented by normalized energy unit. For example, in an ON operation state, the loT device may consume 10 units of energy per 5 milli second (ms) for transmissions and 1 unit of energy per 5 ms for reception. In RETENTION operation state the device may consume 0.01 units of energy per 1 ms. Thus, the ON-threshold, i.e. the threshold to decide whether to operate in ON operation state after RETENTION operation state, can be determined based on an energy model. For example, if the ON-Timer lasts for 10 ms and the RETENTION-Timer for 40 ms, than the loT can calculate an ON-threshold of 11.4 units of energy.

Similarly, the OFF-threshold can be defined. For example, if the loT device has a lower energy charge level than required for a cycle in the RETENTION operation state lasting for the RETENTION-Timer, e.g. 40 ms, and 0.01 units of energy per 1 ms in RETENTION operation state, the OFF-threshold can be defined or determines as 0.4 units of energy in RETENTION operation state. This facilitates that communication between node and loT device can be made more efficient because of the common understanding between loT device and node.

The OFF and ON-threshold may be adapted so that change to OFF operation state (either from ON operation state or RETENTION operation) can be avoided as much as possible, because once the loT device has entered OFF operation state the time that it will take to become "available" again to the node for communication (e.g. transit to ON operation state or RETETION operation state) will be unknown to node, i.e. this situation is undetermined for the node. This may be avoided by increasing the energy threshold to enter ON state (i.e. ON-threshold). If device transit from RETETION operation state to OFF operation state, this can imply that energy harvesting during RETENTION state is not as good as expected. For example, the energy source may become unavailable, which can be improved by providing more charging sources, e.g. by providing a carrier wave signal by the node to the loT device.

Thus, by deciding based on an energy charge level of the loT device as the trigger, for example by the thresholds, the OFF operation state can be avoided in certain circumstances. Further, failed communication process, e.g. if in the ON state is not sufficient energy to successfully finalize a communication process, can be avoided.

To further improve the communication efficiency with the node, according to a modification of the 1^{st} implementation, the loT can further decide whether to operate the loT device in the first operation state or in the second operation state based on a first operation state timer, wherein the first operation state timer is a timer for the first operation state. For example, as shown in Fig. 8, the loT device can start an ON-Timer and/or and RETENTION timer. These timers can be configured or indicated for the loT device.

In particular, the circuitry, in operation, can decide whether to operate the loT device in the first operation state or in the second operation state upon expiration of the first operation state timer. In other words, upon expiry of a timer, the loT devices determines or measures an energy charge level of the loT device. For example, based on the threshold value, e.g. the ON-threshold, the loT device can predict if a power shortage is likely to occur in the next operation state.

For example, as shown in Fig. 7, at the RETENTION-Timer expiration, the device can determine that in the last RETENTION operation state, the loT device could not accumulate sufficient energy to go to the ON operation state. In other word, the loT device can determine or measure that an energy charge level is lower than ON-threshold. Based on the timer and the energy charge level, the loT device decides to stay in RETENTION state, and may restart a timer.

According to a first example of the modification of the 1^{st} implementation, in case the loT device decides to operate the loT device in the first operation state, the loT device can restart the first operation state timer. For example, in the solution Fig. 7, the loT device stays in the RETENTION operation state based on the trigger indicating to not to go to the ON operation state, and the loT device restarts the RETENTION-Timer. This may simplify the operation of the loT device.

According to a second example of the modification of the 1^{st} implementation 1, in case the loT device decides to operate the loT device in the first operation state, the loT device can start a second operation state timer, wherein the second operation state timer is a timer for the second operation state. For example, in the solution Fig. 7, the loT device stays in the RETENTION operation state based on the trigger indicating to not to go to the ON operation state, and the loT device restarts the ON-Timer.

According to a third example of the modification of the 1^{st} implementation 1, in case the loT device decides to operate the loT device in the first operation state, the loT device can start the second operation state timer and restart the first operation state timer one after the other. For example, in the solution Fig. 7, the loT device stays in the RETENTION operation state based on the trigger indicating not to go to the ON state, and the loT device restarts the ON-Timer and then the RETENTION timer. In other words, this is to change ON time duration to RETENTION time duration without impacting on alternating period between an ON-Timer duration and a RETENTION-Timer duration. This facilities to keep the node and the loT device in synchronization. In other words, due to the ON-Timer and RETENTION-Timer, ON and RETETNITION operation states can be alternated with a fixed pattern (e.g. 10ms-40ms). This facilitates that the node can predict a successful communication with the loT device and the node know when to expect response from the loT device. Even if the loT device is kept in the RETENTION operation state as shown in Figs. 7 and 8, the pattern can be still kept after the loT device has harvested sufficient energy and recover from RETENTION operation state by using the solution of the third example of the modification of the 1^{st} implementation, resulting in, e.g. 10ms(ON)-40ms(R)-50ms(R)-10ms(ON)-40ms(R).

The above third example of the modification of the 1^{st} implementation proposes that the trigger is determined upon expiry of a timer. As discussed above, the trigger can be determined during the timer is running. In such a situation, in case the loT device decides to operate the loT device in the second operation state, the loT device can run the first operation state timer upon its expiry in the second operation state and start the second operation state timer in the second operation sate one after the other. In other words, when it is decided to operate the loT device in the second operation state, the remaining duration of the first operation state timer can be add to the second operation state timer. For example, ON-Timer is 10ms and RETENTION-Timer is 40ms. After 7ms ON-Time, device goes to RETENTION state and then the time for the RETENTION state may be 3ms+40 ms =43ms.

### 2^{nd} Implementation - Message communicated with the node as a trigger

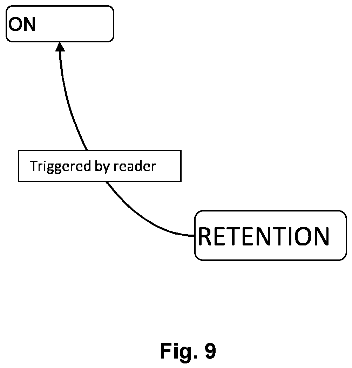

An exemplary 2^{nd} implementation that can be combined with the solutions of the 1^{st} implementation is shown in **Figs. 9** to **13****.** The loT device can decide whether to operate the device in an ON operation state or an RETENTION operation state based on a message communicated with the node.

In particular, according to the 2^{nd} implementation the loT device further comprises a transceiver, which, in operation, communicates a message for a communication process with a node; and the circuitry, in operation, decides whether to operate the loT device in the first operation state or in the second operation state in response to the communication of the message.

In particular, according to the examples shown in **Figs. 9 to 11****,** the circuitry, in operation, can decide in response to receiving the message from the node to operate the loT device in the second operation state. In others words, a received message triggers the change of an operation state.

For example, as shown in **Fig. 9****,** the loT device is operated in the RETENTION operation state and the node triggers the loT device to transit to ON operation state, for example by sending a message with a preamble comprising a start-indicator. In other words, in the example of Fig. 9, the loT device can have a lower energy harvesting capability in the second operation state than in the first operation state. This solution facilitates that the node can better control the timing to start communication with loT device. This example may be combined with any of the solutions discussed in the 1^{st} implementation, e.g. additionally considering an energy threshold. Additionally or alternatively, even not shown in Fig. 9, the node may trigger the loT device to transit from ON operation state to RETENTION operation state.

According to the example discussed in Fig. 9, the loT device can monitor for a start-indicator during RETENTION operation state and/or ON operation state. Since this signal comprised in the message can be designed to be very simple such as a one bit signal such as an On-Off Keying (OOK) signal, monitoring such signal does not increase energy consumption too much for RETENTION and/or ON operation state. As used herein OOK is a form of modulation. According to a simple example, it is in the form of an amplitude shift keying (ASK). In OOK, digital data can be transmitted for example by the presence or absence of a carrier signal.

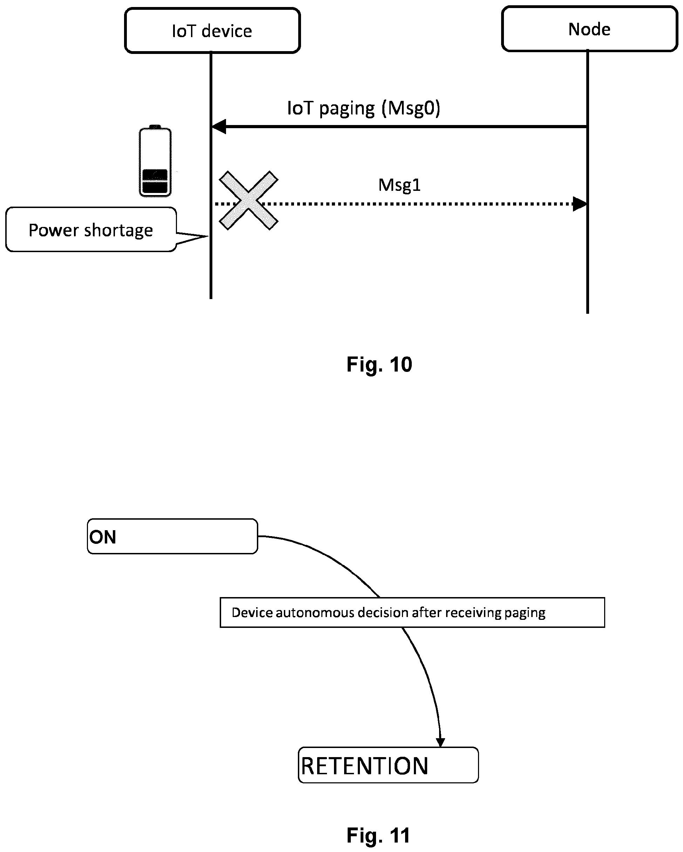

Additionally or alternatively to the solution shown in Fig. 9, according to a further example shown in **Figs 10 and 11****,** the circuitry, in operation, determines the energy charge level of loT device in response to receiving the message and the loT device bases the decision whether to operate the loT device in the first operation state or in the second operation state on the energy charge level of the loT device. With regard to the determination of the energy charge level is referred to the solutions of 1^{st} implementation. For example, as shown in Fig. 11, the loT device is operated in the ON operation state. Further, as shown in Fig. 10, the node sends a message Msg0 to the loT device. After receiving the message, e.g. the loT paging (i.e. MsgO), the loT device can decide, as shown in Fig. 11, to transit to RETENETION operation state. This facilitates to harvest energy and at the same time maintain minimum activities, such as keeping volatile memory content for running a timer and/or receiving messages. Further, the loT device can decide to skip responding to the message. In other words, the loT device can skip, based on the determined energy charge level as discussed in the examples of the 1^{st} implementation, sending, by the transceiver, in operation, at least one response related to the communication process. This solution facilitates that the loT device does not falling into an OFF operation state unnecessarily, which would be the case without skipping as discussed in the scenario of Fig. 5. In particular, in the solution shown in Figs. 10 and 11, the loT device can have a higher energy harvesting capability in the second operation state than in the first operation state. The response may skipped in view of the RETENTION operation state does not transmission.

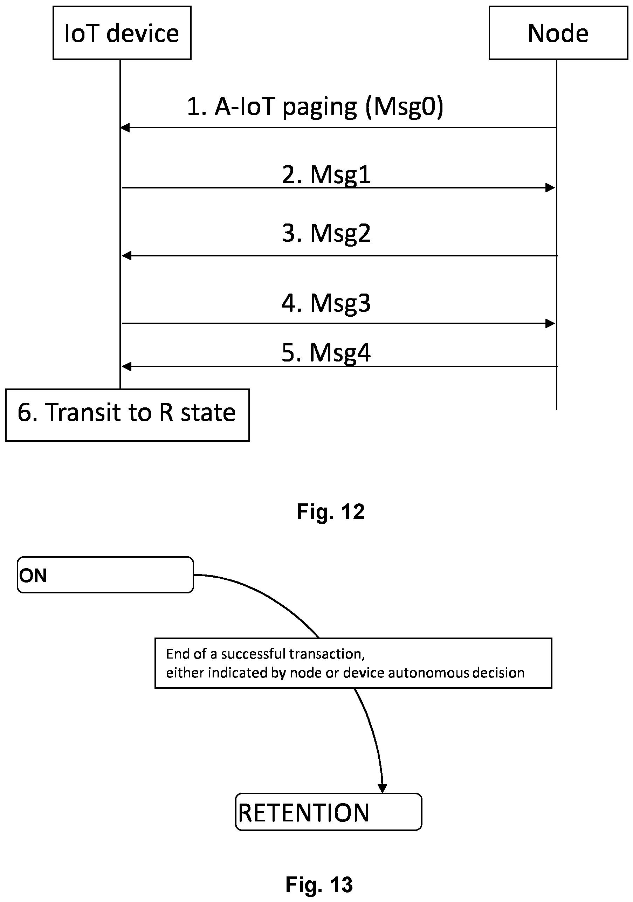

Additionally or alternatively to the solutions shown in Figs. 9 to 11, according to a further example shown in **Figs 12 and 13****,** the circuitry, in operation, decides, in response to a communication complete indication of the communication process to operate the loT device in the second operation state. For example, as shown in Fig. 13, the loT device is operated in the ON operation state. Further, as shown in Fig. 12, the node sends a message Msg0 to the loT device. After receiving the message, e.g. the loT paging (i.e. MsgO), the loT device can decide, as shown in Fig. 13, to stay in ON operation state, for example based on an energy charging level as discussed in the examples of the 1^{st} implementation, because the loT device has sufficient energy to successfully complete the process. Then, after the loT device completes the communication process, for example an access procedure or a transaction, the device can transit to RETENTION operation state, even if ON Timer has not expired. In other words, upon completion of a communication of a communication process, the loT device decides to change the operation state. This facilitates to increase the capabilities of the loT device to harvest energy because it can be assumed that the node will not trigger the loT device again immediately if the device has successfully completed a communication process such as an access procedure. The loT device can make use of such time for energy harvesting.

According to an option of the solution shown in Figs. 12 and 13, the circuitry, in operation, keeps a first operation state timer in the second operation state running in response to communication complete indication of the communication process and starts upon expiration of the first operation state timer a second operation state timer. As discussed in third example of the modification of the 1^{st} implementation, this facilitates to keep the node and the loT device in synchronization.

According to an option of the solution shown in Figs. 12 and 13, the communication complete indication comprises at least one of: a last message received from the node; a number of transactions necessary for a communication process; a number transmissions and/or receptions necessary for a communication process; an amount of time necessary for a communication process; and an amount of bit information to be carried by a communication process. In other words, the loT device can identify the end of the communication process such as an access procedure by a pre-defined number of communication procedure steps have been completed. Additionally or alternatively, a message containing an acknowledgement (ACK) from the node associated with this communication process, e.g. Msg4 in Fig. 12, may be the indication. Further, the node can indicate the loT device to change to the RETENETION operation state by an indication at the end of communication process, e.g. in the last message of the communication process or a separate message (when needed). This indication may be similar to the message discussed with regard to Fig. 9, e.g. a start-indicator, which can be a particularly simple signal.

### 3^{rd} Implementation - Notification to the node of an energy status of the device

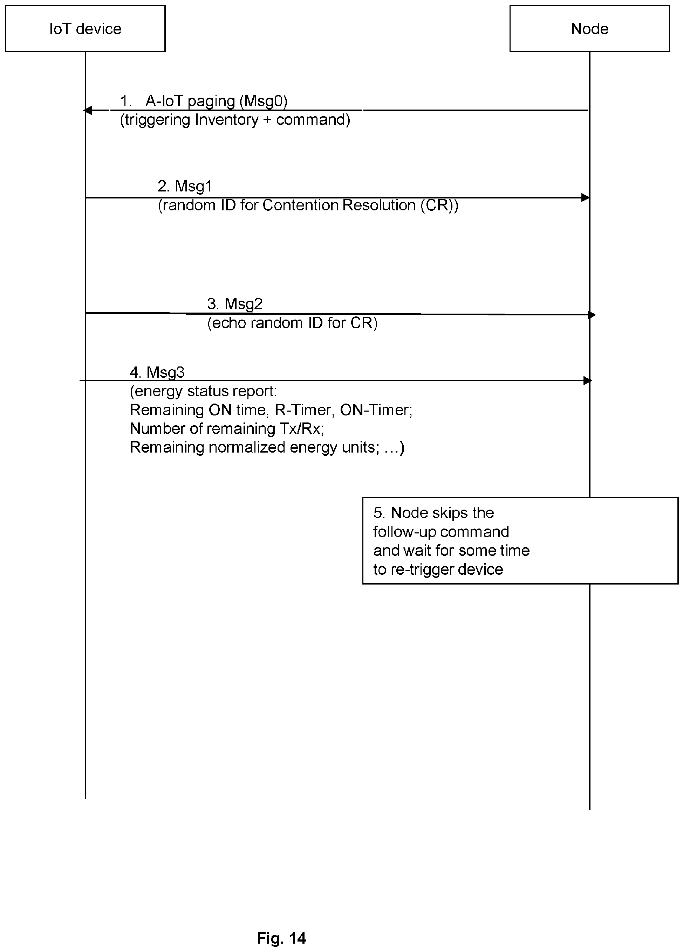

An exemplary 3^{rd} implementation that can be combined with examples discussed in the 1^{st} implementation and the 2^{nd} implementation is shown in **Fig. 14****.** In more details, as in the 2^{nd} implementation and shown in Fig. 14, the transceiver according to the 3^{rd} implementation communicates a message for a communication process with a node. Further, the circuitry, in operation, decides whether to operate the loT device in the first operation state or in the second operation state in response to the communication of the message. In more detail, as discussed in the 1^{st} implementation, the loT device determines the energy charge level of loT device in response to receiving the message as discussed in example of the 2^{nd} and 3^{rd} implementation and the loT device bases the decision whether to operate the loT device in the first operation state or in the second operation state on the energy charge level of the loT device.

Additionally or alternatively to the 2^{nd} implementation, in case the loT device decides to operate the loT device in the first operation state, the transceiver, in operation, sends to the node a notification indicating the energy charge level of the loT device. In particular, as for example shown in Fig. 14, after receiving loT paging (i.e. MsgO), in Msg1 or Msg3, the device can report to the node that the loT device the energy charge level of the loT device.

For example, the notification can comprise at least one of: remaining time of a first operation state timer; a value of a first operation state timer; a value of a second operation state timer; a number of remaining transactions necessary for a communication process; a number of remaining transmissions and/or receptions necessary for a communication process; an amount of remaining time necessary for a communication process; an amount of remaining bit information to be carried by a communication process; and an amount of remaining energy for operating the loT device in the first operation state and the second operation state. In other words, as shown in Fig. 14 with Msg3, the loT device can report RETENTION-Timer value and/or ON-Timer value in at least one of messages titled Msg1 or Msg3 or in a later D2R transmissions. This facilitates that depending on when a message, here the paging, is received by loT device, the remaining time for the ON-Timer can be different among different loT devices. With loT device reporting the remaining ON time, the node knows how long the device is still available for communication. The node can act accordingly. For example, the node can consider not to deliver further commands to the loT device, and instead wait for the device next ON duration.

Additionally or alternatively to notifying the remaining time, the loT device can report remaining energy in terms of number of remaining transmissions and/or receptions or the above discussed energy units. This facilitates that the node can avoid wasting resources to blindly proceed the follow-up procedures in this round. When the loT device becomes available again is not explicitly known for the node to start the next round but the node may start a barrier timer to not necessarily trigger the loT based on the reported energy status and/or may provide a carrier wave signal to the loT device so that the loT device can harvest energy.

### Further examples

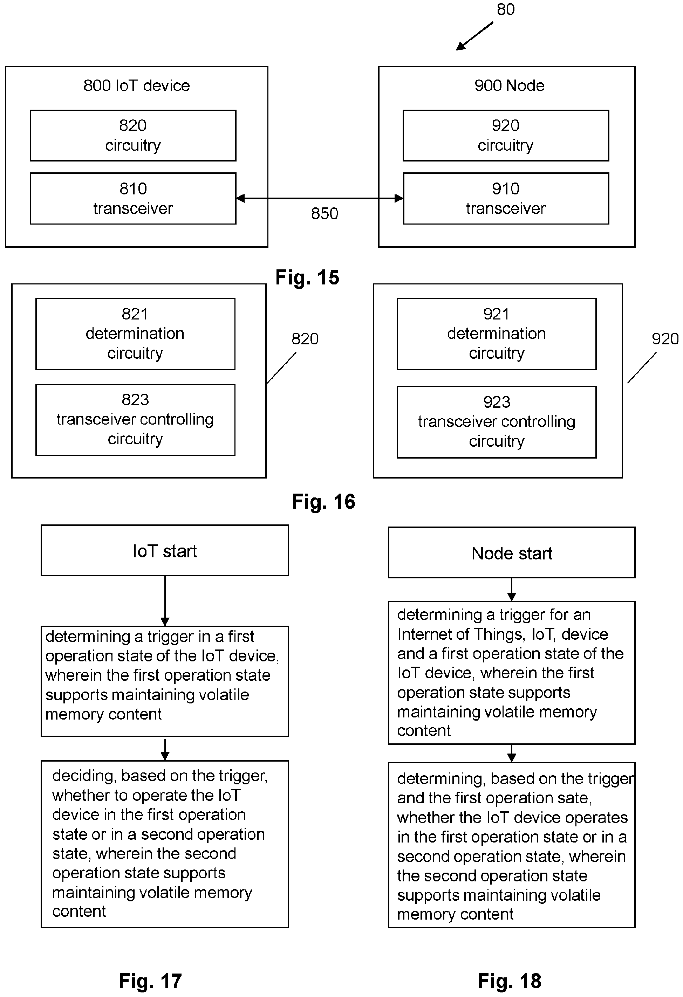

The above solution and the implementations are summarized in the flow chart for the loT device in **Fig. 17****.** In particular, the loT device determines whether to operate the loT device in the first operation state or in a second operation state.

In particular, in a first step, the loT device determines a trigger in a first operation state of the loT device, wherein the first operation state supports maintaining volatile memory content. Then, in a second step, the loT decides, based on the trigger, whether to operate the loT device in the first operation state or in a second operation state, wherein the second operation state supports maintaining volatile memory content. The decision in second step may consider further measures, e.g. an energy charging level of the loT device.

In case of determining that the loT device decides to operate the loT device in the first operation state, for example remain in the ON state, which is a high power mode, the loT device may send a notification to the node. Alternatively, the loT device may decide to change to the second operation sate, for example change to RETENTION state, a response related to the message may be skipped.

As similar flow chart for the node is shown in **Fig. 18****.** In particular, the node can determine whether to the loT device is operated in a first operation state or in a second operation, based on a trigger such as a message or based on not failed communication process as shown in Fig. 12.

In particular, in a first step the node determines a trigger for the device and determines a first operation state of the loT device, wherein the first operation state supports maintaining volatile memory content. Then, the node determines based on the trigger and the first operation state, whether the loT device operates in the first operation state or in a second operation state, wherein the second operation state supports maintaining volatile memory content.

In case of determining that the loT device has not a power shortage, e.g. by receiving a response from the loT, the node can continue with the communication process.

In case of determining that the loT device has or may have a power shortage, e.g. by not receiving response from the loT device as a trigger, the node may delay a further message and/or provide an RF signal, the the RF signal for providing energy to be harvested by the loT device.

### Further implementations

As mentioned above, there may be numerous loT devices communicating with a node. The loT devices may not have the legacy RRC states, ARQ, and HARQ. Therefore, a contention-based channel may be used to initiate communication. However, this could cause excessive attempts for channel access, which may result in an loT device power shortage. Further, the loT device power shortage can lead to unsuccessful communication processes. Further, in view of an unsuccessful communication processes the node may not know the reason for the failure. Some loT devices have a limited energy capacity. The energy could be obtained from the environment (vibration, light, heat) or a carrier wave, e.g., provided by the gNB/intermediate node. It may implement, e.g. repetitions to increase robustness.

To facilitate the communication considering the mentioned limitations, the loT device harvests energy for a communication process based on an indication of an loT device power shortage.

**Fig. 15** illustrates a general, simplified and exemplary block diagram of an loT device 800 and a node (base station or intermediate node connected to a base station) 900 forming a communication system 80. In the following, it is exemplarily assumed that node 900 is a base station functioning as a scheduling device like an eNB or gNB (network node). The loT device 800 may be a wearable, smart home device, automotive device, sensor, smart key, or healthcare device, for example.

The loT device 800 and the base station 900 (eNB/gNB) are communicating with each other over a (wireless) physical channel 850, respectively, using their transceivers 810 (IoT device side) and 910 (base station side). The base station 900 and the loT device 800 are capable of transmitting as well as receiving radio signals via the channel 850. Together, the base station 900 and the loT device 800 form a communication system 80, for example, a 5G or future communication system. The communication system 80 may further include other entities such as further base stations, intermediate nodes and/or loT devices. Any of the above-described embodiments may be implemented in the A-loT device 800, the base station 900 and/or communication system 80 where appropriate.

The loT device 800 comprises a transceiver 810 and a (processing) circuitry 820, and the base station 900 comprises a transceiver 910 and a (processing) circuitry 920. The transceiver 810, 910 in turn comprise and/or function as a receiver and/or a transmitter. In this disclosure, in other words, the term "transceiver" is used for hardware and/or software components that allow the loT device 800, and the base station 900 to transmit and/or receive radio signals over the wireless channel 150, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions.

In some embodiments, the transceiver 810 of the loT device 800 receives a message such as a paging or trigger signal. The circuitry 820 of the loT device 800 determines based on an indication of an loT device power shortage to harvest energy for the communication process.

In some embodiments, the circuitry 920 of the base station 900 determines based on an indication of an loT device power shortage that the loT device harvests energy for the communication process.

The circuitries may be configured by software to perform the functions as described in any of the above embodiments. As shown in **Fig. 16** the circuitry 820 of the loT device may further comprise a functional module referred to as determination circuitry 821 for performing the determination. A transceiver controlling circuitry 823 is a functional module that controls the transceiver 810 (in Fig. 15) to receive the message. Moreover, as shown in **Fig. 16****,** the circuitry 920 of the base station or an intermediate node may further comprise a functional module referred to as determination circuitry 921 for performing any determinations. A transceiver controlling circuitry 923 is a functional module that controls the transceiver 910 (in Fig. 15) to transmit the message.

A corresponding exemplary method for an loT device, as shown in **Fig. 17****,** comprises the following steps performed by an loT device:
determining a trigger in a first operation state of the loT device, wherein the first operation state supports maintaining volatile memory content; and
deciding, based on the trigger, whether to operate the loT device in the first operation state or in a second operation state, wherein the second operation state supports maintaining volatile memory content.

A corresponding exemplary method for node, as shown in **Fig. 18****,** comprises the following steps performed by a node:
determining a trigger for an Internet of Things, loT, device and a first operation state of the loT device, wherein the first operation state supports maintaining volatile memory content; and
determining, based on the trigger and the first operation sate, whether the loT device operates in the first operation state or in a second operation state, wherein the second operation state supports maintaining volatile memory content.

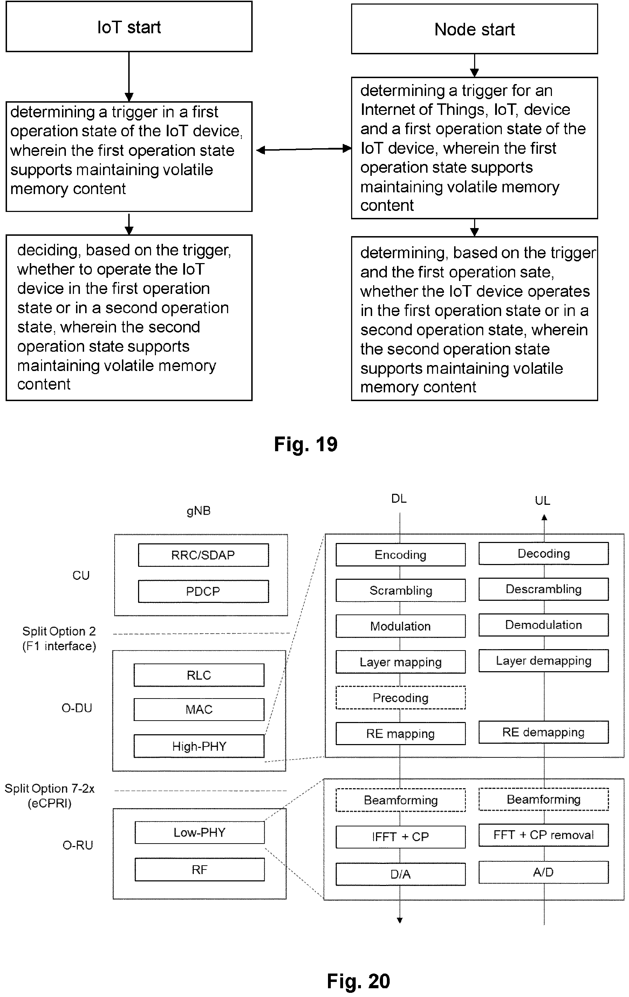

**Fig. 19** is a signaling diagram of an exemplary and simplified implementation of the improved transmission procedure, illustrating the exchange of common understanding between the different participating entities (here the loT device and the node) and the steps performed at these entities. The loT behavior and node behavior follow the above described loT device and node and the respective methods.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT device may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above-mentioned embodiments and examples.

### RRC connection setup and reconfiguration procedures

Interactions between a UE, gNB, and AMF (an 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 20** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication, and communication between an Ambient loT Reader and an Ambient loT Device. The channels in the present disclosure may be replaced with PSCCH, PSSCH, Physical Sidelink Feedback Channel (PSFCH), PSBCH, PRDCH (Physical Reader-to-Device Channel), PORCH (Physical Device-to-Reader Channel), PDCCH, PUCCH, PDSCH, PUSCH, and PBCH. For example, control information of the present disclosure may be replaced with any of DCI, UCI, SCI (Sidelink Control Information), R2D Control Information and D2R Control Information.

In addition, the present disclosure may be applied to any of a terrestrial network or a network other than a terrestrial network (NTN: Non-Terrestrial Network) using a statellite or a High Altitude Pseudo Statellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a statellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also, a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

The following numerated clauses relate to aspects of the invention.

Aspect 1: An Internet of Thing, loT, device, comprising:
a circuitry, which, in operation, determines a trigger in a first operation state of the loT device, wherein the first operation state supports maintaining volatile memory content; and
the circuitry, which, in operation, decides, based on the trigger, whether to operate the loT device in the first operation state or in a second operation state, wherein the second operation state supports maintaining volatile memory content.

Aspect 2: The loT device according to aspect 1, wherein the circuitry, in operation, further decides whether to operate the loT device in the first operation state or in the second operation state based on a first operation state timer, wherein the first operation state timer is a timer for the first operation state, optionally wherein the circuitry, in operation, decides whether to operate the loT device in the first operation state or in the second operation state upon expiration of the first operation state timer.

Aspect 3: The loT device according to aspect 2, wherein the circuitry, in operation, in case the loT device decides to operate the loT device in the first operation state, restarts the first operation state timer.

Aspect 4: The loT device according to any of aspects 2 and 3, wherein the circuitry, in operation, in case the loT device decides to operate the loT device in the first operation state, starts a second operation state timer, wherein the second operation state timer is a timer for the second operation state.

Aspect 5: The loT device according to aspects 3 and 4, wherein the circuitry, in operation, in case the loT device decides to operate the loT device in the first operation state, starts the second operation state timer and restarts the first operation state timer one after the other.

Aspect 6: The loT device according any one of the previous aspects, wherein the circuitry, in operation, determines an energy charge level of the loT device as the trigger and decides whether to operate the loT device in the first operation state or the second operation state based on the energy charge level.

Aspect 7: The loT device according to aspect 6, wherein the energy charge level comprises at least one of the following information:
- a percentage of remaining energy of the loT device;
- a number of transactions necessary for a communication process;
- a number of transmissions and/or receptions necessary for a communication process;
- an amount of time necessary for a communication process;
- an amount of bit information to be carried by a communication process;
- a type of communication process; and.
- an amount of energy for operating the loT device in the first operation state and the second operation state.

Aspect 8: The loT device according any one of the previous aspects, wherein the loT device further comprises
a transceiver, which, in operation, communicates a message for a communication process with a node;
the circuitry, in operation, decides whether to operate the loT device in the first operation state or in the second operation state in response to the communication of the message.

Aspect 9: The loT device according to any one of aspects 6 to 7 and according to aspect 8, wherein
the circuitry, in operation, determines the energy charge level of loT device in response to receiving the message and the loT device bases the decision whether to operate the loT device in the first operation state or in the second operation state on the energy charge level of the loT device.

Aspect 10: The loT device according to aspect 9, wherein in case the loT device decides to operate the loT device in the first operation state, the transceiver, in operation, sends to the node a notification indicating the energy charge level of the loT device.

Aspect 11: The loT device according to aspect 10, wherein the notification comprises at least one of:
- remaining time of a first operation state timer;
- a value of a first operation state timer;
- a value of a second operation state timer;
- a number of remaining transactions necessary for a communication process;
- a number of remaining transmissions and/or receptions necessary for a communication process;
- an amount of remaining time necessary for a communication process;
- an amount of remaining bit information to be carried by a communication process; and
- an amount of remaining energy for operating the loT device in the first operation state and the second operation state.

Aspect 12: The loT device according to aspects 9, wherein the circuitry, in operation, further skips, based on the determined energy charge level, sending, by the transceiver, in operation, at least one response related to the communication process.

Aspect 13: The loT device according to aspect 8, wherein the circuitry, in operation, decides, in response to a communication complete indication of the communication process to operate the loT device in the second operation state.

Aspect 14: The loT device according to aspect 13, wherein the circuitry, in operation, keeps a first operation state timer in the second operation state running in response to communication complete indication of the communication process and starts upon expiration of the first operation state timer a second operation state timer.

Aspect 15: The loT device according to any one of aspects 13 to 14, wherein communication complete indication comprises at least one of:
- a last message received from the node;
- a number of transactions necessary for a communication process;
- a number transmissions and/or receptions necessary for a communication process;
- an amount of time necessary for a communication process; and
- an amount of bit information to be carried by a communication process.

Aspect 16: The loT device according to any one of aspects 12 to 15, wherein the loT device has a higher energy harvesting capability in the second operation state than in the first operation state.

Aspect 17: The loT device according to any one of aspects 8 to 11, wherein the circuitry, in operation, decides in response to receiving the message to operate the loT device in the second operation state.

Aspect 18: loT device according to aspect 17, wherein the loT device has a lower energy harvesting capability in the second operation state than in the first operation state.

Aspect 19: The loT device according any one of the previous aspects, wherein the loT further comprises a transceiver, which, in operation, can receive messages in the first operation state and the second operation state and the loT device can transmit messages in the first operation state or the second operation state.

Aspect 20: The loT device according any one of the previous aspects, wherein the loT device comprises at least two, preferably three operation states, each operation state relating to a capability of the loT device to harvest energy.

Aspect 21: A method comprising the following steps performed by an Internet of Things, loT, device:
determining a trigger in a first operation state of the loT device, wherein the first operation state supports maintaining volatile memory content; and
deciding, based on the trigger, whether to operate the loT device in the first operation state or in a second operation state, wherein the second operation state supports maintaining volatile memory content.

The method of the aspect 21 or any embodiment/implementation thereof may be implemented in the loT device according to aspects 1 to 20 or any embodiment/implementation thereof.

Aspect 22: A node comprising:
a circuitry, which, in operation, determines a trigger for an Internet of Things, loT, device and a first operation state of the loT device, wherein the first operation state supports maintaining volatile memory content; and
the circuitry, which, in operation, determines, based on the trigger and the first operation sate, whether the loT device operates in the first operation state or in a second operation state, wherein the second operation state supports maintaining volatile memory content.

The node of the aspect 22 or any embodiment/implementation thereof may be implemented with the loT device according to the aspects 1 to 20 or any embodiment/implementation thereof.

Aspect 23: A method comprising the following steps performed by a node:
determining a trigger for an Internet of Things, loT, device and a first operation state of the loT device, wherein the first operation state supports maintaining volatile memory content; and
determining, based on the trigger and the first operation sate, whether the loT device operates in the first operation state or in a second operation state, wherein the second operation state supports maintaining volatile memory content.

The method of the aspect 23 or any embodiment/implementation thereof may be implemented in the node according to aspect 22 or any embodiment/implementation thereof

According to a further aspect it is provided a communication system comprising the loT device according to aspects 1 to 20 or any embodiment/implementation thereof a node according to the aspect 22 and any embodiment/implementation thereof.

Moreover, in an aspect, a computer program is provided including code instructions stored on a non-transitory medium, which when executed on one or more processor, causes the one or more processors to execute a method according to any of the above mentioned aspects and examples.

## Claims

1. An Internet of Thing, loT, device, comprising:
a circuitry, which, in operation, determines a trigger in a first operation state of the loT device, wherein the first operation state supports maintaining volatile memory content; and
the circuitry, which, in operation, decides, based on the trigger, whether to operate the loT device in the first operation state or in a second operation state, wherein the second operation state supports maintaining volatile memory content.

2. The loT device according to claim 1, wherein the circuitry, in operation, further decides whether to operate the loT device in the first operation state or in the second operation state based on a first operation state timer, wherein the first operation state timer is a timer for the first operation state,
optionally wherein the circuitry, in operation, decides whether to operate the loT device in the first operation state or in the second operation state upon expiration of the first operation state timer,
optionally wherein the circuitry, in operation, in case the loT device decides to operate the loT device in the first operation state, restarts the first operation state timer.

3. The loT device according to claim 2, wherein the circuitry, in operation, in case the loT device decides to operate the loT device in the first operation state, starts a second operation state timer, wherein the second operation state timer is a timer for the second operation state,
optionally wherein the circuitry, in operation, in case the loT device decides to operate the loT device in the first operation state, starts the second operation state timer and restarts the first operation state timer one after the other.

4. The loT device according any one of the previous claims, wherein the circuitry, in operation, determines an energy charge level of the loT device as the trigger and decides whether to operate the loT device in the first operation state or the second operation state based on the energy charge level, optionally wherein the energy charge level comprises at least one of the following information:
• a percentage of remaining energy of the loT device;
• a number of transactions necessary for a communication process;
• a number of transmissions and/or receptions necessary for a communication process;
• an amount of time necessary for a communication process;
• an amount of bit information to be carried by a communication process;
• a type of communication process; and.
• an amount of energy for operating the loT device in the first operation state and the second operation state.

5. The loT device according any one of the previous claims, wherein the loT device further comprises
a transceiver, which, in operation, communicates a message for a communication process with a node;
the circuitry, in operation, decides whether to operate the loT device in the first operation state or in the second operation state in response to the communication of the message.

6. The loT device according to claims 4 and 5, wherein
the circuitry, in operation, determines the energy charge level of loT device in response to receiving the message and the loT device bases the decision whether to operate the loT device in the first operation state or in the second operation state on the energy charge level of the loT device.

7. The loT device according to claim 6, wherein in case the loT device decides to operate the loT device in the first operation state, the transceiver, in operation, sends to the node a notification indicating the energy charge level of the loT device,
optionally wherein the notification comprises at least one of:
• remaining time of a first operation state timer;
• a value of a first operation state timer;
• a value of a second operation state timer;
• a number of remaining transactions necessary for a communication process;
• a number of remaining transmissions and/or receptions necessary for a communication process;
• an amount of remaining time necessary for a communication process;
• an amount of remaining bit information to be carried by a communication process; and
• an amount of remaining energy for operating the loT device in the first operation state and the second operation state.

8. The loT device according to claim 6, wherein the circuitry, in operation, further skips, based on the determined energy charge level, sending, by the transceiver, in operation, at least one response related to the communication process.

9. The loT device according to claim 5, wherein the circuitry, in operation, decides, in response to a communication complete indication of the communication process to operate the loT device in the second operation state,
optionally wherein communication complete indication comprises at least one of:
• a last message received from the node;
• a number of transactions necessary for a communication process;
• a number transmissions and/or receptions necessary for a communication process;
• an amount of time necessary for a communication process; and
• an amount of bit information to be carried by a communication process.

10. The loT device according to claim 9, wherein the circuitry, in operation, keeps a first operation state timer in the second operation state running in response to communication complete indication of the communication process and starts upon expiration of the first operation state timer a second operation state timer.

11. The loT device according to any one of claims 8 to 10, wherein the loT device has a higher energy harvesting capability in the second operation state than in the first operation state.

12. The loT device according to any one of claims 5 to 7, wherein the circuitry, in operation, decides in response to receiving the message to operate the loT device in the second operation state, optionally wherein the loT device has a lower energy harvesting capability in the second operation state than in the first operation state.

13. The loT device according any one of the previous claims, wherein the loT further comprises a transceiver, which, in operation, can receive messages in the first operation state and the second operation state and the loT device can transmit messages in the first operation state or the second operation state, optionally wherein the loT device comprises at least two, preferably three operation states, each operation state relating to a capability of the loT device to harvest energy.

14. A method comprising the following steps performed by an Internet of Things, loT, device:
determining a trigger in a first operation state of the loT device, wherein the first operation state supports maintaining volatile memory content; and
deciding, based on the trigger, whether to operate the loT device in the first operation state or in a second operation state, wherein the second operation state supports maintaining volatile memory content.

15. A node comprising:
a circuitry, which, in operation, determines a trigger for an Internet of Things, loT, device and a first operation state of the loT device, wherein the first operation state supports maintaining volatile memory content; and
the circuitry, which, in operation, determines, based on the trigger and the first operation sate, whether the loT device operates in the first operation state or in a second operation state, wherein the second operation state supports maintaining volatile memory content.
